# EUROPEAN PATENT APPLICATION

(11) **EP 4 455 009 A1**
(43) Date of publication of application: **30.10.2024**
(21) Application number: 24170895.7
(22) Date of filing: 17.04.2024
(51) Int. Cl.: B64D 11/06

(54) **PASSENGER SEATING SYSTEM**

(30) Priority: 24.04.2023 US 202318138356
(71) Applicant: B/E Aerospace, Inc., Winston-Salem, NC 27105 (US)
(72) Inventor: LARA, Oscar Ruiz, Kirkland, WA (US); VANINETTI, Travis J., Bothell, WA, 98011 (US); FINLAY, Travis K., Winston-Salem, NC (US); ADCOCK, Christopher D., Advance, NC, 27006 (US)
(74) Representative: Dehns

(57) **Abstract**

A passenger seating system (102) in an aircraft cabin may include at least one aisle (104) which runs in a direction parallel to a longitudinal axis of the aircraft cabin. The passenger seating system (102) may further include one or more passenger compartments (106) which face a direction in parallel with the longitudinal axis of the aircraft cabin. The one or more passenger compartments (106) may include at least one aircraft seat (110), a structural panel (200), and a privacy wall (202). The aircraft seat (110) may be positioned within the one or more passenger compartments (106) at an angle relative to the longitudinal axis of the aircraft cabin. The structural panel (200) may be positioned behind the aircraft seat (110), and it may extend in a perpendicular direction relative to the longitudinal axis of the aircraft cabin. The privacy wall (202) may be positioned between the aircraft seat (110) and the adjacent aisle.

## Description

### TECHNICAL FIELD

The present invention generally relates to a passenger seating system, and, more particularly, to a reverse-herringbone passenger seating arrangement including passenger storage areas.

### BACKGROUND

Aircraft seats in passenger seating systems within an aircraft cabin are configured to allow a passenger to rest in one or more seating positions. Different airlines may include different seating arrangements to reflect their design identity through shape and styling selections. For example, products in a reverse-herringbone configuration all share a similar structural profile, with a structural panel curving behind the aircraft seat structure to in front of the in-flight entertainment (IFE) display. The curvature of the structural panel creates an identifiable profile that limits airline's efforts to tailor seat design by dictating a specific curvature in a highly visible area of the seat.

### SUMMARY

A passenger seating system in an aircraft cabin is disclosed, in accordance with one or more embodiments of the present disclosure. In some embodiments, the passenger seating system includes at least one aisle extending in a longitudinal direction parallel to a longitudinal axis of the aircraft cabin. In some embodiments, the passenger seating system includes one or more passenger compartments extending in a longitudinal direction running parallel to the longitudinal axis of the aircraft cabin. In some embodiments, the one or more passenger compartments includes at least one aircraft seat positioned within the one or more passenger compartments, where the at least one aircraft seat is positioned at an angle relative to the longitudinal axis of the aircraft cabin. In some embodiments, the one or more passenger compartments include a structural panel positioned behind the at least one aircraft seat and configured to extend in a direction running perpendicular to the longitudinal axis of the aircraft cabin. In some embodiments, the one or more passenger compartments include a privacy wall positioned between the aircraft seat and the at least one aisle.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a plan view of a passenger seating system of an aircraft cabin, in accordance with one or more embodiments of the present disclosure;
FIG. 2 illustrates a perspective view of one or more passenger compartments, in accordance with one or more embodiments of the present disclosure;
FIG. 3A illustrates a plan view of the passenger seating system architecture of the present disclosure, in accordance with one or more embodiments of the present disclosure;
FIG. 3B illustrates a plan view of the passenger seating system architecture of the prior art, in accordance with one or more embodiments of the present disclosure;
FIG. 4 illustrates a perspective view of a passenger occupying an aircraft seat positioned within the passenger compartment, in accordance with one or more embodiments of the present disclosure; and
FIG. 5 illustrates an elevated rear view of the passenger compartment, in accordance with one or more embodiments of the present disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly, embodiments of the inventive concepts disclosed herein are directed to a passenger seating system 102. The passenger seating system 102 may be integrated within a non-vehicular system or a system which includes a vehicle (e.g., aircraft, watercraft, automobile, train, etc.). In addition, the passenger seating system 102 may be used in any suitable environment.

In some embodiments, the passenger seating system 102 may include at least one passenger compartment 106. The at least one passenger compartment 106 may include an aircraft seat 110 positioned at an angle relative to a longitudinal axis 108 of an aircraft cabin 100. The at least one passenger compartment 106 may also include a structural panel 200. The structural panel 200 may be installed behind the aircraft seat 110 in a position that is perpendicular to the longitudinal axis 108 of the aircraft cabin 100. Further, the structural panel 200 may be configured to support one or more aircraft seat 110 features (e.g., at least one in-flight entertainment (IFE) display, one or more storage compartments 206, and the like).

In some embodiments, the structural panel 200 may have a flat configuration. The structural panel 200 having a flat configuration may allow airlines to define the storage compartment 206 profile more freely. For example, having a flat structural panel 200 may provide passengers with more comfort and ergonomic benefits by increasing the living space within the passenger compartment 106.

In some embodiments, the passenger compartment 106 may include a cavity which is defined by a surface of the structural panel 200, a portion of the privacy wall 202, and a rear surface of the aircraft seat 110. For example, the cavity may be utilized as a storage compartment 206, which may be accessible by a passenger seated behind the structural panel 200 or by a flight crew member standing in the aisle 104 adjacent to the passenger compartment 106. Further, this storage compartment 206 may be positioned at a sufficient height so that it will not interfere when the aircraft seat 110 transitions into a bed configuration. The proximity of the storage compartment 206 to the aisle 104 allows a flight crew member to monitor the area more easily and replenish drinks when necessary. The location of this storage compartment 206 also improves safety by separating the storage of liquids from the storage of electronics.

In some embodiments, the passenger compartment 106 may be integrated within a passenger seating system 102 located within an aircraft. Further, the passenger compartment 106 may include at least one aircraft seat 110. The angle of the at least one aircraft seat 110 may be between 18 and 45 degrees relative to the longitudinal axis 108 of the aircraft cabin 100. Aircraft seats 110 installed within an avionics environment may be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), the Society of Automotive Engineers (SAE), or any other standards setting organization or company; the Radio Technical Commission for Aeronautics (RTCA) or any other guidelines agency or organization; or the like.

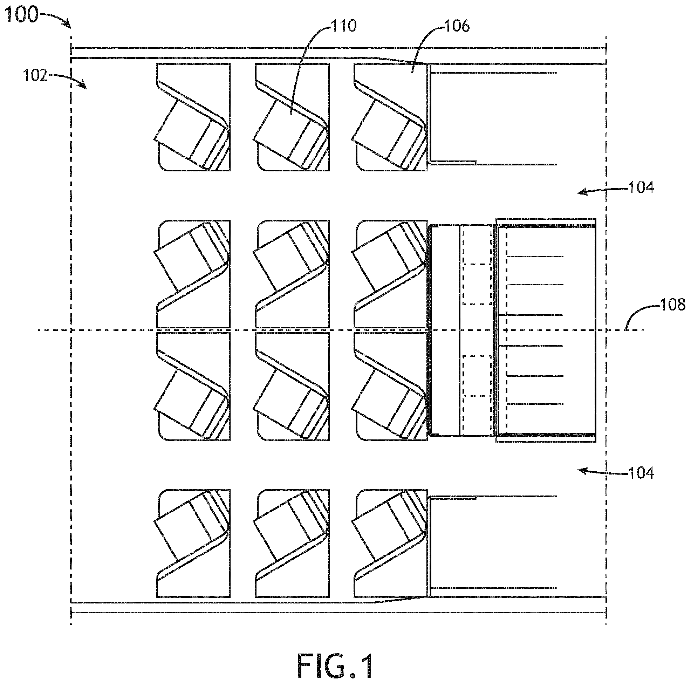

Referring now to FIG. 1, a plan view of a passenger seating system 102 of an aircraft cabin 100 is illustrated, in accordance with one or more embodiments of the present disclosure. The aircraft cabin 100 may include at least one aisle 104 extending in a longitudinal direction parallel to a longitudinal axis 108 of the aircraft cabin 100. In some embodiments, the passenger seating system 102 may include one or more passenger compartments 106 positioned on opposite sides of the at least one aisle 104. As shown in FIG. 1, the aircraft cabin 100 may include, but is not limited to, two aisles 104 running through the aircraft cabin 100 in a longitudinal direction parallel to the longitudinal axis 108 of the aircraft cabin 100. For example, the two aisles 104 may be separated by two passenger compartments 106 positioned in-between the two aisles 104, as shown in FIG. 1. It is noted herein that the aircraft cabin 100 is not limited to having two passenger compartments 106 positioned in-between the two aisles 104, however, the aircraft cabin 100 may include one or more passenger compartments 106 positioned in-between the two aisles 104.

In some embodiments, each passenger compartment 106 of the one or more passenger compartments 106 may include at least one aircraft seat 110 positioned within the one or more passenger compartments 106. For example, the at least one aircraft seat 110 may be configured at an angle relative to the longitudinal axis 108 of the aircraft cabin 100. By way of another example, the at least one aircraft seat 110 may face away from the nearest aisle 104.

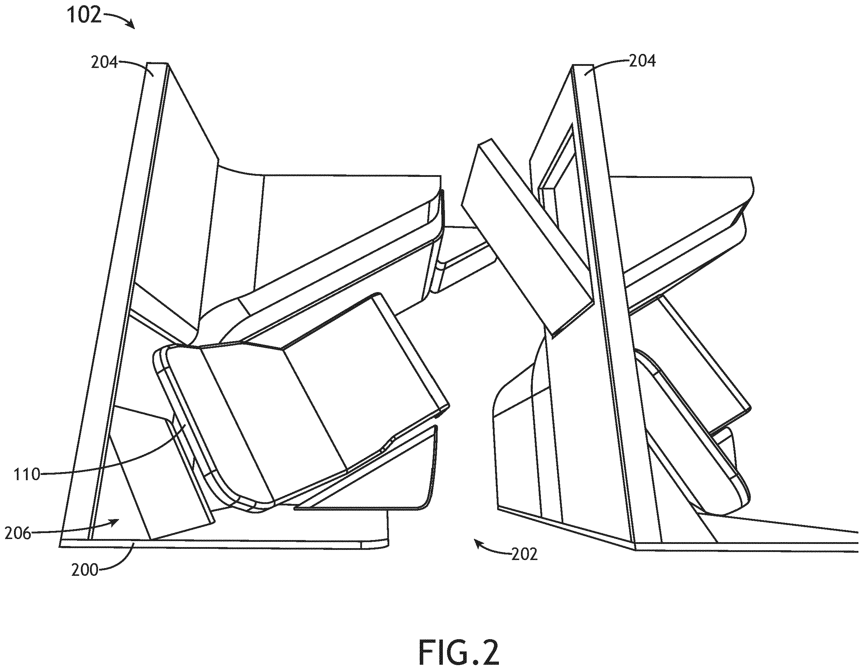

FIG. 2, in general, illustrates a perspective view of one or more passenger compartments 106, in accordance with one or more embodiments of the present disclosure. It is noted herein that the one or more passenger compartments 106 may be installed within an aircraft cabin 100 of a passenger aircraft.

In some embodiments, the passenger compartment 106 may include a privacy shell with one or more privacy shell elements (e.g., privacy wall 202). The privacy shell may include an opening 204 within the one or more privacy shell elements into the passenger compartment 106. The opening 204 may be configured to lead to an aisle 104 of the aircraft cabin 100. In some embodiments, the passenger compartment 106 may include a door for the opening 204. For example, the door may swing or slide into an open position against the one or more privacy shell elements. By way of another example, one or more privacy shell elements may be at least partially hollow, and the door may be slid into a cavity defined in the one or more privacy shell elements.

The passenger compartment 106 may include at least one aircraft seat 110 and a structural panel 200. In some embodiments, the structural panel 200 may be positioned behind the aircraft seat 110. For example, the structural panel 200 may be configured to extend in a direction running perpendicular to the longitudinal axis 108 of the aircraft cabin 100. By way of another example, the structural panel 200 may have a flat configuration, as shown in FIG. 2.

In some embodiments, the flat structural panel 200 may be configured to support one or more aircraft seat 110 features (e.g., at least one in-flight entertainment (IFE) display, one or more storage compartments 206, or any other aircraft 110 seat features known in the art). In some embodiments, the at least one IFE display may be coupled to a portion on a rear surface of the structural panel 200. For example, the at least one IFE display may be recessed within an opening of the portion on the rear surface of the structural panel 200. By way of another example, the portion supporting the IFE display may be configured to pivot about an axis 108 associated with the structural panel 200. The portion on the rear surface of the structural panel 200 may be configured to pivot out from the structural panel 200 such that the IFE display is facing the at least one aircraft seat 110. By way of a further example, the IFE display may be positioned at a sufficient height to avoid interfering with the transition of the aircraft seat 110 from an upright configuration to a bed configuration. It is noted herein that the IFE display may further be fixedly coupled to the structural panel 200.

In some embodiments, the aircraft seat 110 may be positioned at a select distance from the preceding structural panel 200. For example, the aircraft seat 110 may be positioned between 96.52 and 132.08 cm (38 and 52 inches) from the structural panel 200 belonging to the passenger compartment 106 in front. In some embodiments, the aircraft seat 110 may be configured in a direction that is set at an angle relative to the longitudinal axis 108 of the aircraft cabin 100. For example, the angle of the aircraft seat 110 may be set between 18 and 45 degrees relative to the longitudinal axis 108 of the aircraft cabin 100.

In some embodiments, the passenger compartment 106 may include a privacy wall 202 positioned in-between the aircraft seat 110 and the aisle 104 of the aircraft cabin 100. For example, the privacy wall 202 may be configured to extend in a direction parallel to the longitudinal axis 108 of the aircraft cabin 100. The privacy wall 202 may be configured to extend a sufficient distance to shield at least a portion of the aircraft seat 110.

In some embodiments, the passenger compartment 106 may include a cavity defined by at least one of a surface of the structural panel 200, a surface of the privacy wall 202, and a surface of the aircraft seat 110. For example, the cavity may be configured as a triangular-shaped storage compartment 206. It is noted herein that the size of the storage compartment 206 may be correlated to the angle of the aircraft seat 110. For example, as the angle of the aircraft seat 110 relative to the longitudinal axis 108 of the aircraft cabin 100 increases, the storage compartment 206 size also increases. It is noted herein, that the storage compartment 206 is not limited to a triangular shape.

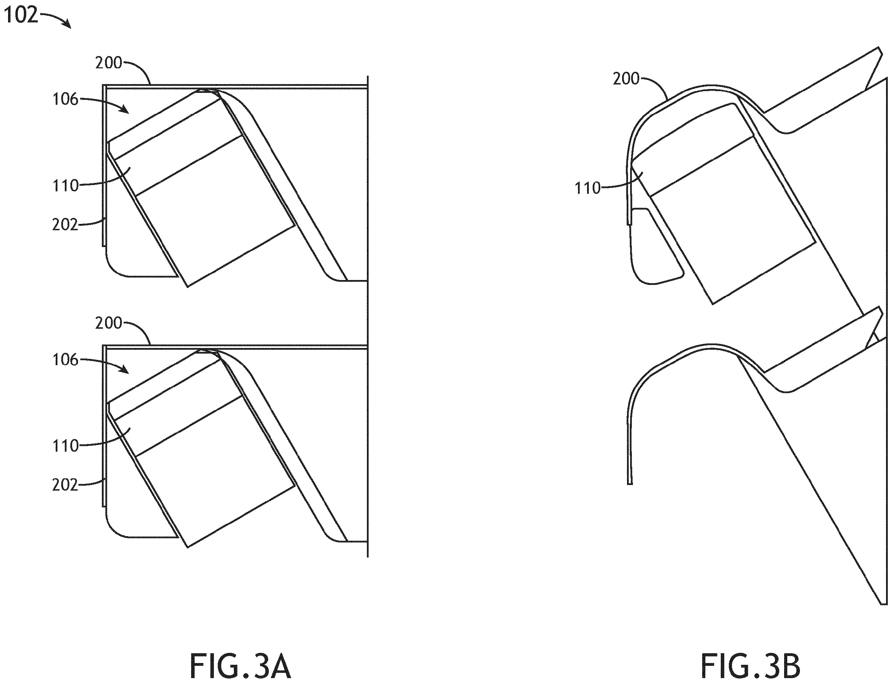

FIGS. 3A-3B, in general, illustrate plan views of the passenger seating system 102 architecture of the present disclosure compared to the passenger seating system architecture of the prior art, respectively. As shown in FIG. 3A, the passenger seating system 102 architecture of the present disclosure includes a flat structural panel 200 which extends in a direction running perpendicular to the longitudinal axis 108 of the aircraft cabin 100. Whereas, as shown in FIG. 3B, the passenger seating system architecture of the prior art includes a structural panel 200 having a curved shape conforming to the aircraft seat 110.

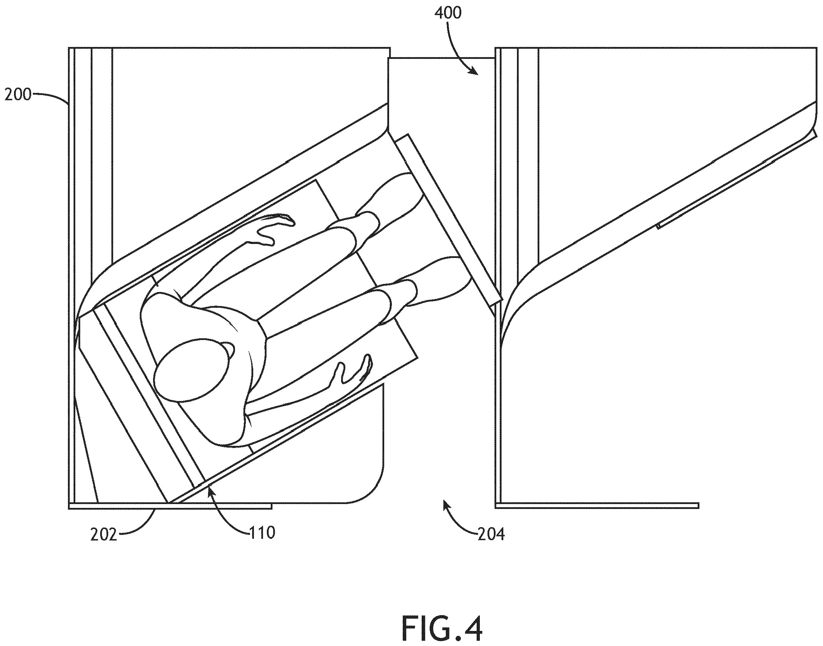

FIG. 4, in general, illustrates a perspective view of a passenger occupying an aircraft seat 110 positioned within the passenger compartment 106, in accordance with one or more embodiments of the present disclosure.

In some embodiments, the passenger compartment 106 may include one or more aircraft seats 110. In general, an aircraft seat 110 may be translatable (e.g., trackable or slidable). The aircraft seat 110 may be rotatable about an axis cross-wise through the aircraft seat 110 into a position including, but not limited to, an upright or raised position, one or more lounge or reclined positions, and a lie-flat or bed position. For example, the aircraft seat 110 may transition directly between the upright position and the lie-flat or bed position. By way of another example, it is noted herein the aircraft seat 110 may transition through one or more reclined positions between the upright position and the lie-flat or bed position. By way of another example, the aircraft seat 110 may transition into one or more reclined positions in a motion separate from the transition between the upright position and the lie-flat or bed position. Therefore, the above description should not be interpreted as a limitation on the scope of the disclosure but merely an illustration.

In some embodiments, the passenger compartment 106 may include one or more electronics or electronic devices. For example, the one or more electronic devices may include, but are not limited to, one or more aircraft seat 110 actuation devices (e.g., assemblies, controls, actuators, and/or the like), one or more in-flight entertainment (IFE) devices, one or more speakers configured to provide media content separate from or accompanying the media content shown on the in-flight entertainment (IFE) devices, one or more lights, or the like.

In some embodiments, the passenger compartment 106 may include a footwell 400 positioned below at least a portion of the structural panel 200. For example, one or more dimensions of the footwell 400 may change in response to a transition of the aircraft seat 110 between an upright or raised configuration, a lounge or reclined configuration, and the lie-flat or bed configuration.

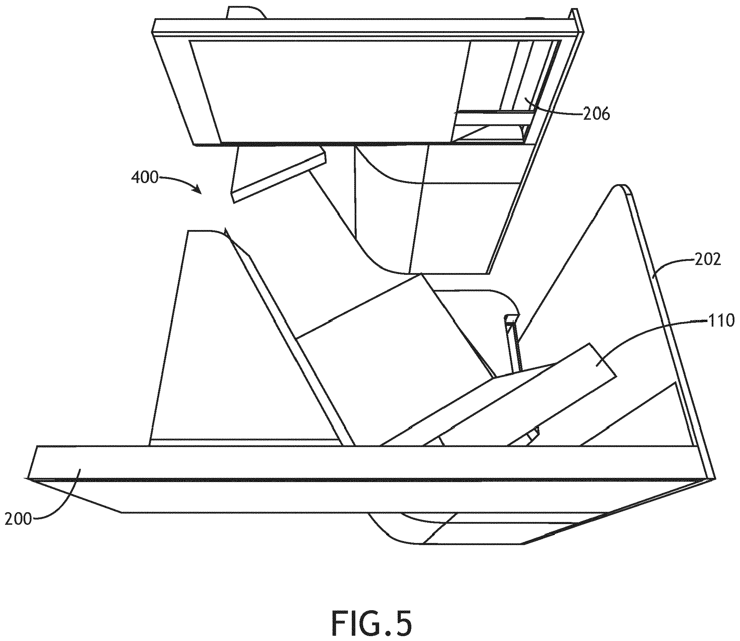

FIG. 5, in general illustrates an elevated rear view of the passenger compartment 106, in accordance with one or more embodiments of the present disclosure. The passenger compartment 106 may include a storage compartment 206.

In some embodiments, the storage compartment 206 may be accessible via an opening in at least a portion of the structural panel 200. For example, the passenger seated behind the structural panel 200 may be able to access the storage compartment 206, as shown in FIG. 5.

The storage compartment 206 may be configured to receive and hold (e.g., contain, secure, or the like) one or more passenger amenities including, but not limited to, paper-printed materials (e.g., magazines, newspapers, pamphlets, or the like), select personal electronic devices (e.g., phones, tablets, phablets, laptops, music devices, digital video disc (DVD) players, handheld gaming consoles or devices, or the like), food products, drink products, or the like.

In some embodiments, the storage compartment 206 may include one or more electronic connections for one or more passenger amenities such as, but not limited to, one or more charging ports, one or more charging cables, or the like.

In some embodiments, the storage compartment 206 may include one or more electronic connections in communication with one or more components of the passenger compartment 106 such as, but not limited to, one or more display device connection ports, one or more display device connection cables, one or more audio output jacks (e.g., headphone jacks), one or more audio input jacks, or the like.

In some embodiments, the storage compartment 206 may include one or more safety devices (e.g., air masks, personal floatation devices, or the like).

Although embodiments of the present disclosure describe example arrangements of passenger compartments 106 with included aircraft seats 110 within the aircraft cabin 100, it is noted herein that any particular passenger compartment 106 with any particular aircraft seat 110 may be oriented in any direction within the aircraft cabin 100, and be oriented in any direction with respect to other passenger compartments 106 with other aircraft seats 110. Therefore, the above description should not be interpreted as a limitation on the present disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as nonlimiting examples unless otherwise specified in the claims.

## Claims

1. A passenger seating system (102) in an aircraft cabin, comprising:
at least one aisle (104), wherein the at least one aisle extends in a longitudinal direction parallel to a longitudinal axis of the aircraft cabin;
one or more passenger compartments (106), wherein the one or more passenger compartments extend in a longitudinal direction parallel to the longitudinal axis of the aircraft cabin, the one or more passenger compartments comprising:
at least one aircraft seat (110) positioned within the one or more passenger compartments (106), wherein the at least one aircraft seat is configured at an angle relative to the longitudinal axis of the aircraft cabin; and
a structural panel (200) positioned behind the at least one aircraft seat (110), wherein the structural panel (200) is configured to extend in a straight line perpendicular to the longitudinal axis of the aircraft cabin.

2. The system of Claim 1, further comprising a privacy wall (202) positioned between the at least one aircraft seat (110) and the at least one aisle (104), wherein the privacy wall (202) is parallel to the longitudinal axis of the aircraft cabin.

3. The system of Claim 1 or 2, further comprising a storage compartment (206) housed in at least a portion of the structural panel (200).

4. The system of Claim 3, wherein the storage compartment (206) is accessible via at least one opening in a rear side of the structural panel.

5. The system of any preceding Claim, wherein the angle of the at least one aircraft seat (110) is between 18 and 45 degrees relative to the longitudinal axis of the aircraft cabin.

6. The system of any preceding Claim, wherein the passenger seating system includes two aisles, wherein each of the two aisles extend in a direction parallel to the longitudinal axis of the aircraft cabin.

7. The system of Claim 6, wherein the two aisles are separated by at least two passenger compartments positioned in-between the two aisles.

8. The system of Claim 6, wherein at least one passenger compartment is positioned on both sides of each aisle of the two aisles.

9. The system of any preceding Claim, wherein each aircraft seat (110) of the one or more passenger compartments are configured in a direction facing away from the nearest at least one aisle.

10. The system of any preceding Claim, wherein each aircraft seat (110) of the aircraft cabin is positioned between 96.52 and 132.08 cm (38 and 52 inches) behind the structural panel of another aircraft seat.

11. The system of any preceding Claim, wherein the structural panel (200) is further configured to include at least one display coupled to a rear surface of the structural panel.

12. The system of Claim 11, wherein the at least one display is recessed within an opening of the structural panel (200) and is configured to pivot out from the structural panel (200) such that the at least one display is facing the at least one aircraft seat.

13. The system of Claim 11, wherein the at least one display is fixedly coupled to the structural panel (200).

14. The system of any preceding Claim, wherein the at least one aircraft seat (110) is configured to transition from at least one of an upright position to a bed position.

15. The system of any preceding Claim, wherein the passenger compartment includes an opening beneath at least a portion of the structural panel (200), wherein the opening is configured to at least allow a user to extend their legs into the opening.
